# EUROPÄISCHE PATENTANMELDUNG

(11) **EP 1 717 069 A2**
(43) Veröffentlichungstag der Anmeldung: **02.11.2006**
(21) Anmeldenummer: 06007559.5
(22) Anmeldetag: 11.04.2006
(51) Int. Cl.: B60G 21/04, B60G 5/00

(54) **Mechanisches Stabilisierungssystem für Tandemachsen, Drillings- und/oder Vierlingsachsen**

(30) Priorität: 26.04.2005 DE 102005019345
(71) Anmelder: DaimlerChrysler AG, 70567 Stuttgart (DE)
(72) Erfinder: Boros, Imre, 72649 Wolfschlugen (DE); Krauter, Thomas, 71540 Murrhardt (DE)

(57) **Zusammenfassung**

Die Erfindung betrifft ein mechanisches Stabilisierungssystem für Tandemachsen, Drillings- und/oder Vierlingsachsen im Kraftfahrzeugbau mit zwei, drei oder vier hintereinander angeordneten, am Fahrzeugaufbau (5) beweglich gelagerten radtragenden Achsen (11,12) oder Achsteilen. Dazu weist jede Achse pro Radseite eine gelenkig gelagerte Koppelstange (21-24) auf. Pro Fahrzeugseite sind die Koppelstangen paarweise mit einer Wippe (31,32) gekoppelt. Die Wippen stützen sich an den freien Ende eines U-Stabilisators (40) ab.

Mit der vorliegenden Erfindung wird ein mechanisches Stabilisierungssystem für Tandemachsen, Drillings- und/oder Vierlingsachsen entwickelt, bei dem die Gewichtskraft des Fahrzeugaufbaus und die auf diesen Aufbau wirkenden Seitenkräfte unabhängig voneinander am Fahrwerk abgestützt werden.

## Beschreibung

Die Erfindung betrifft ein mechanisches Stabilisierungssystem für Tandemachsen, Drillings- und/oder Vierlingsachsen im Kraftfahrzeugbau mit zwei, drei oder vier hintereinander angeordneten, am Fahrzeugaufbau beweglich gelagerten radtragenden Achsen oder Achsteilen.

Aus der GB 2 342 902 A ist ein mechanisches Stabilisierungssystem für ein zweiachsiges Fahrzeug bekannt. Bei diesem Fahrzeug ist die vordere Achse an einer geschobenen Längslenkergabel und die hintere Achse an einer gezogenen Längslenkergabel geführt. Jede Gabel ist am Fahrzeugaufbau in einem sphärischen Gelenk gelagert, wobei beide Gelenke auf einer Verbindungslinie zwischen den beiden Achsmitten liegen. An jedem der Längslenkergabeln ist auf nur einer Fahrzeugseite in der Nähe des jeweiligen Gelenks, ein querstehender Hebel angeordnet. Beide Hebel, die auf einer gemeinsamen Fahrzeugseite liegen, sind über einen Z-Stabilisator gekoppelt. Der längsliegende Z-Stabilisator ist am Fahrzeugaufbau gelagert. Diese Konstruktion ist sehr aufwendig und benötigt einen großen Bauraum im unteren Fahrzeugaufbaubereich.

Der vorliegenden Erfindung liegt die Problemstellung zugrunde, ein mechanisches Stabilisierungssystem für

Der vorliegenden Erfindung liegt die Problemstellung zugrunde, ein mechanisches Stabilisierungssystem für Tandemachsen, Drillings- und/oder Vierlingsachsen zu entwickeln, bei dem die Gewichtskraft des Fahrzeugaufbaus und die auf diesen wirkenden Seitenkräfte unabhängig voneinander am Fahrwerk abgestützt werden. Das System soll mit möglichst wenigen und einfachen Bauteilen bei geringem Bauraumbedarf dauerhaft und zuverlässig funktionieren.

Diese Problemstellung wird mit den Merkmalen der unabhängigen Ansprüche gelöst. Dazu weist jede Achse pro Radseite eine gelenkig gelagerte Koppelstange auf. Pro Fahrzeugseite sind die Koppelstangen der vorderen, ersten und der hinteren, zweiten Achse jeweils an ihren oberen Enden gelenkig mit den äußeren Gelenkstellen einer Wippe gekoppelt. Jede Wippe weist in ihrem mittleren Bereich eine Gelenkstelle auf, über die sie an jeweils einem freien Ende eines U-Stabilisators angelenkt ist. Der U-Stabilisator ist hierbei am Fahrzeugaufbau in mindestens zwei Lagerstellen gelagert.

Wird das Stabilisierungssystem für eine Drillings- oder Vierlingsachse verwendet, werden pro Fahrzeugseite z.B. je zwei Wippen über eine weitere Wippe untereinander verbunden. Die verbindende Wippe stützt sich dann am Stabilisator ab.

Bei den dargestellten mechanischen Stabilisierungssystemen wird ein Stabilisierungsverhalten nur bei Wankbewegungen des Fahrzeugaufbaus bewirkt. Bei einem annähernd parallelen oder aufbauverwindenden Ein- bzw. Ausfedern einzelner Achsen, Achsgruppen oder Räder ergibt sich nahezu keine Stabilisatorwirkung, wodurch besonders in unebenem Gelände die Bodenhaftung der Räder und die Traktion erheblich verbessert werden.

In den Ausführungsbeispielen ist die Stabilisierungsmechanik an angetriebenen Starrachsen demonstriert. Selbstverständlich kann das beschriebene Stabilierungssystem auch für nicht angetriebene Achsen, z.B. die eines Sattelaufliegers, verwendet werden. Des Weiteren kann das System auf Fahrwerke angewandt werden, deren Achsen aus Einzelradaufhängungen bestehen. Die Koppelstangen wirken dort auf geeignete Achsteile, z.B. die untern radführenden Lenker.

Weitere Einzelheiten der Erfindung ergeben sich aus den Unteransprüchen und der nachfolgenden Beschreibung schematisch dargestellter Ausführungsformen:
- Figur 1:: Mechanisches Stabilisierungssystem in dimetrischer Darstellung;
- Figur 2:: Seitenansicht zu Figur 1;
- Figur 3:: Draufsicht zu Figur 1;
- Figur 4:: Mechanisches Stabilisierungssystem für eine Drillingsachse;
- Figur 5:: Mechanisches Stabilisierungssystem für eine Vierlingsachse.

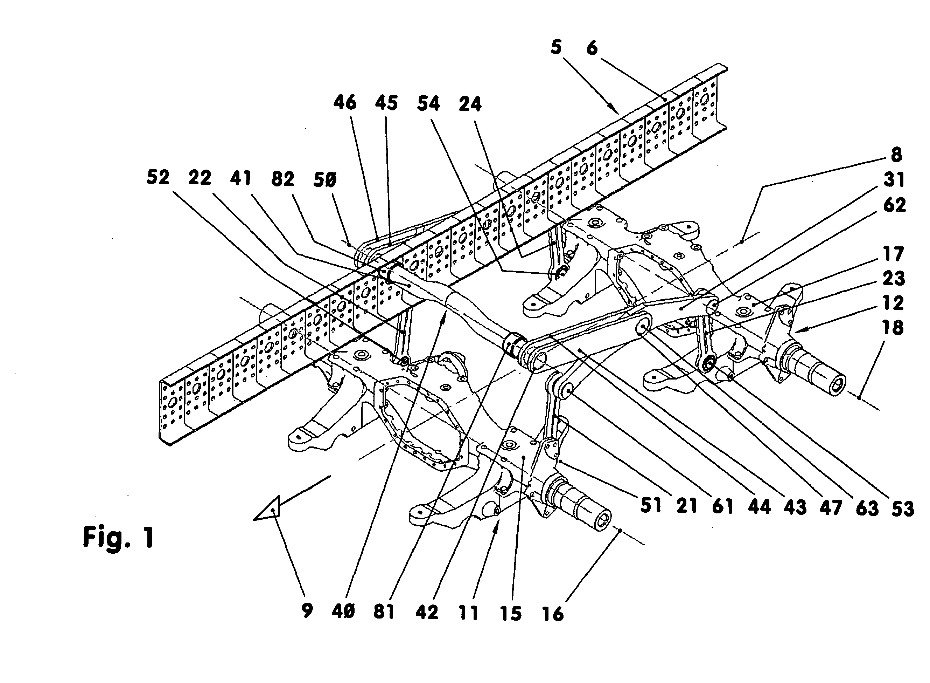

Die Figuren 1 bis 3 zeigen ein mechanisches Stabilisierungssystem für eine Tandemhinterachse eines geländegängigen Nutzfahrzeugs. Die Zwillingsachse umfasst zwei angetriebene Starrachsen (11, 12), die über ein nicht dargestelltes Federungssystem und entsprechende Lenker am Fahrzeugaufbau (5) abgestützt und geführt sind. Vom Fahrzeugaufbau (5) ist nur der beifahrerseitige Rahmenträger (6) gezeigt. Von den Starrachsen (11, 12) ist nur der jeweilige Achskörper (15, 17) abgebildet.

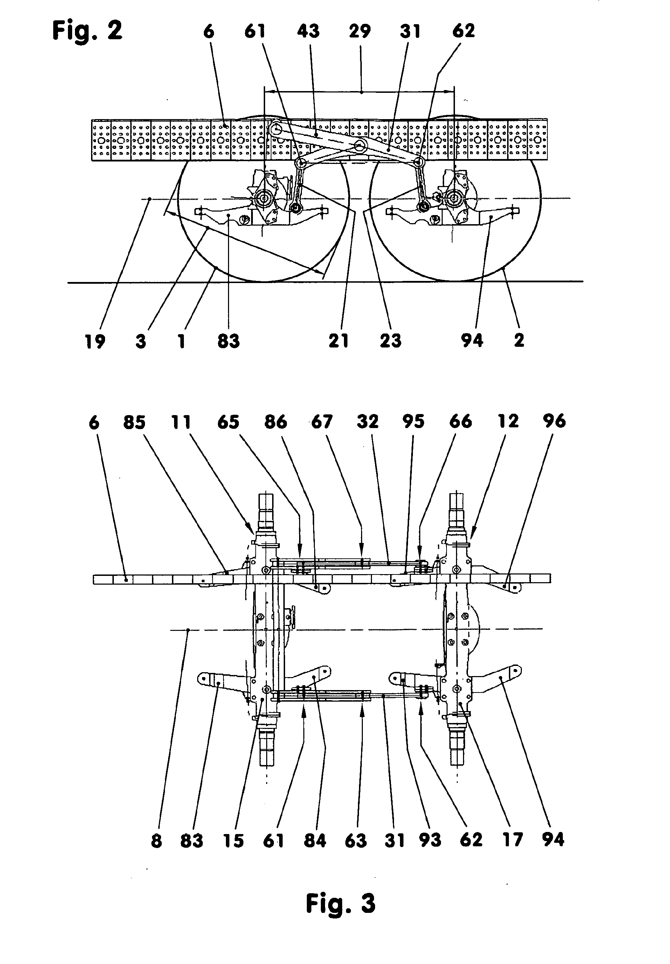

Nach Figur 1 hat jeder Achskörper (15, 17) pro Fahrzeugseite zwei zumindest annähernd horizontal abstehende Kragarme (83, 84; 85, 86) und (93, 94; 95, 96), vgl. Figur 3. An den Enden dieser Kragarme (83-86, 93-96) sind z.B. nicht dargestellte Gasfederbälge zur Lagerung der Achse (11, 12) am Fahrzeugaufbau (5) angeordnet. An den hinteren Kragarmen (84, 86) und (94, 96) der Achskörper (15, 17) befinden sich jeweils die Gelenkstelle (51, 52) und (53, 54). Diese Gelenkstellen (51-54) liegen unterhalb einer Ebene (19), die durch die Raddrehachsen (16, 18) bzw. die Mittellinie der Achskörper (15, 17) gebildet wird, vgl. Figur 1. Hierbei ist jeweils der kürzeste Abstand zwischen den einzelnen Gelenkstellen (51-54) und der entsprechenden, nächstliegenden Raddrehachse (16, 18) größer als 1/6 und kleiner als 1/5 des Reifendurchmessers (3), vgl. Figur 2.

Oberhalb der Achsen (11, 12) sind zwei Wippen (31, 32) angeordnet. Die einzelne Wippe (31, 32) ist hier beispielsweise ein ebener Winkelhebel mit zwei gleichlangen Schenkeln. Die z.B. plattenförmigen baugleichen Wippen (31) und (32) haben je drei Gelenkstellen (61-63, 65-67). Zwei Gelenkstellen (61, 62; 65, 66) befinden sich an den äußeren Enden der Schenkel und je eine Gelenkstelle (63, 67) ist im mittleren Bereich jeder Wippe (31, 32) angeordnet. Die geometrischen Mitten der Gelenkstellen (61-63; 65-67) spannen jeweils ein gleichschenkeliges Dreieck auf, dessen Höhe über der Dreiecksgrundlinie z.B. ein Sechstel der Länge der Dreiecksgrundlinie hat. Der Abstand der Mitten der Gelenkstellen (61, 62) beträgt z.B. 57 bis 65% des Abstandes (29) der Achsen (11) und (12).
Die Mitten der Gelenkstellen (61-63) liegen in der Konstruktionslage in einer vertikalen Fahrzeuglängsebene, die parallel zur Fahrzeuglängsrichtung (9) ausgerichtet ist.

In der Konstruktionslage befinden sich die Gelenkstellen (61, 62) nach Figur 2 auf der Höhe der Unterkante des Rahmenträgers (6). Damit liegen diese Gelenkstellen (61, 62; 65, 66) ca. 20% des Achsabstandes (29) oberhalb der Ebene (19). Der Reifenaußendurchmesser beträgt im Ausführungsbeispiel ca. 90% des Achsabstands (29).

Zwischen den an den Kragarmen (84, 93; 86, 95) gelegenen Gelenkstellen (51, 53; 52, 54) und den Gelenkstellen (61, 62; 65, 66) der Wippen (31, 32) sind einzeln die Koppelstangen (21-24) angeordnet, vgl. Figur 1. Die Gelenkstellen (51, 61; 52, 65; 53, 62; 54, 66) aller Koppelstangen (21-24) haben jeweils drei Freiheitsgrade.

Die Wirklinien der Koppelstangen (21-24) - also die Verbindungslinie zwischen den koppelstangeneigenen Gelenkstellen - der Zwillingsachse (11, 12) liegen in Vertikalebenen, die parallel zur Fahrzeuglängsrichtung (9) orientiert sind. Gegenüber einer vertikalen Fahrzeugquerebene sind sie jeweils um ca. 6 bis 8 Winkelgrade geneigt. Dabei schneiden sich die Wirklinien der Koppelstangen (21) und (23) sowie (22) und (24) jeweils in einem Punkt der weit oberhalb des Rahmenträgers (6) liegt. Diese beiden Schnittpunkte liegen beispielsweise - in der Konstruktionslage - auf der vertikalen Fahrzeugquerebene, die mittig zwischen den Raddrehachsen (17) und (18) angeordnet ist.

Die Wirkungslinien der Koppelstangen (21) und (23) sowie (22) und (24) liegen paarweise in einer Vertikalebene.

Der am Fahrzeugaufbau (5, 6) in Schwenkgelenken (81, 82) gelagerte U-Stabilisator (40) besteht aus einem glatten oder gekröpften Torsionsrohr (41) und beispielsweise vier Stäben (43, 44; 45, 46), die paarweise die Stabilisatorarme bilden. Die Stäbe (43-46) sind beispielsweise rechteckige Platten, deren Plattenbreite größer ist als der Außendurchmesser des Torsionsrohres (41). An den Enden der einzelnen Stäbe befinden sich z.B. gleichgroße Bohrungen (42, 47). In die eine Bohrung (42) wird das Torsionsrohr (41) eingesteckt und dort verschweißt. Alternativ können die Stabe (43-46) auch über gängige Wellen- und Nabenverbindungen am Torsionsrohr (41) befestigt werden. Die andere Bohrung (47) bildet z.B. in Verbindung mit einem Bolzen und der Wippe (31, 32) die Gelenkstelle (63, 67). Je ein Stabpaar (43, 44) und (45,46) umgreift gabelartig eine Wippe (31, 32). Die Gelenkstellen (63, 67) haben als Schwenkgelenke nur einen Freiheitsgrad.

Anstelle der paarweise angeordneten Stäbe (43, 44; 45, 46) kann jeder der beiden Stabilsatorarme auch aus einem einteiligen torsionssteifen Stab gefertigt werden.

Der U-Stabilisator wird am Leiterrahmen (5, 6) so gelagert, dass das Torsionselement (41) - in Fahrtrichtung gesehen - vor den mittleren Gelenkstellen (63, 67) der Wippen (31, 32) angeordnet ist. Die Stäbe (43, 44; 45, 46) weisen somit nach hinten. Selbstverständlich kann der U-Stabilisator auch so eingebaut werden, dass die freien Enden der Stäbe (43, 44; 45, 46) vor den Lagerstellen (81, 82) liegen.

Die Wirkungslinien - die kürzeste Verbindung zwischen den Bohrungen (42, 47) - aller Stäbe (43-46) liegen jeweils in Ebenen, die normal zu den beidseitigen Enden des Torsionsrohres (41) orientiert sind. Demnach sind die Wirkungslinien zumindest in der Konstruktionslage alle parallel zueinander ausgerichtet. Die Wirkungslinien schließen mit der Horizontalen z.B. einen Winkel von ca. 11 bis 12 Winkelgraden ein.

Der Abstand zwischen den Bohrungen (42, 47) beträgt 40 bis 50% des Achsabstands (29). Im Ausführungsbeispiel beträgt er ca. 45%. Dieser Abstand ist immer größer als die halbe maximale Länge der jeweiligen Wippe (31, 32).

Die Mittellinien (50) der Lagerstellen (81, 82) liegen ca. 37% des Achsabstands oberhalb der Ebene (19).

Das Torsionsrohr (41) kann selbstverständlich auch ein stabförmiges, ggf. profiliertes Bauteil sein.

Fährt ein Fahrzeug z.B. in eine Rechtskurve, so neigt sich der Fahrzeugaufbau gegenüber den Achsen (11, 12) nach links. Folglich werden auf der einfedernden Fahrzeugseite die sich an der kurvenäußeren Wippe (31) über die Schwenkgelenkstelle (63) abstützenden Stäbe (43, 44) durch die sich absenkende Lagerstelle (81) im Gegenuhrzeigersinn um einige Winkelgrade nach oben geschwenkt. Die Koppelstangen (21, 23) und die kurvenäußere Wippe (31) nähern sich dem Fahrzeugaufbau (5, 6). Die Schwenkachse der Stäbe (43, 44) ist hierbei durch die gemeinsame Mittellinie (50) der Lagerstellen (81, 82) vorgegeben. Selbst wenn bei dieser Wankbewegung die kurveninneren Räder (1, 2) nicht ausfedern, weil nur die kurvenäußere Seite in die Federung eintaucht, wird das Torsionsrohr (41) - stabilisierende Kräfte aufbauend - tordiert. Diese Torsion verstärkt sich in der Regel, da die kurveninneren Räder (1, 2) meist zusätzlich ausfedern.

Bewegt sich ein mit einer derartig stabilisierten Tandemachse ausgestattetes Fahrzeug quer zu einer Bodenwelle, federt zunächst die vordere Achse (11) parallel ein. Die hintere Achse (12), die die Bodenwelle noch nicht erreicht hat, behält ihr bisheriges Niveau bei. Die Koppelstangen (21, 22) werden über den Achskörper (15) gegenüber dem Fahrzeugaufbau (5, 6) nach oben bewegt. Die Wippen (31, 32) schwenken parallel zueinander in den nahezu unverändert liegenden Gelenkstellen (62, 66) im Uhrzeigersinn nach oben, vgl. Figur 1 und 3. Dabei heben sich auf jeder Fahrzeugseite die Gelenkstellen (63, 67) um ca. den halben Wert der Anhebung der Achse (11). Die Stabpaare (43, 44) und (45, 46) verschwenken parallel miteinander im Gegenuhrzeigersinn. Das Torsionsrohr (41) wird dabei nicht tordiert. Es treten somit wunschgemäß keine stabilisierende Kräfte auf.

Bei einer Diagonalverwindung der Achsen (11, 12) verschwenkt - z.B. von vorn betrachtet - die vordere Achse (11) im Uhrzeigersinn und die hintere Achse (12) im Gegenuhrzeigersinn um eine beispielsweise gemeinsame Schwenkachse (8), vgl. Figur 1. Hierbei bewegt sich an der Wippe (31) die vordere Koppelstange (21) nach unten und die hintere Koppelstange (23) nach oben. Die Wippe (31) verschwenkt um die Gelenkstelle (63), ohne deren Lage gegenüber dem Fahrzeugaufbau zu ändern. Auf der anderen Fahrzeugseite läuft die gleiche Bewegung ab, nur dass sich hier die hintere Koppelstange (24) absenkt und die vordere (22) abhebt. Die Wippe (32) bewegt sich somit entgegensetzt zur Wippe (31). auch hier behält der Gelenkpunkt (67) gegenüber dem Fahrzeugaufbau (5, 6) weitgehend seine Lage. Wiederum entstehen am U-Stabilisator (40) keine stabilisierende Kräfte.

Die Figur 3 zeigt eine Drillingsachse mit einer mechanischen Stabilisierung. Hier sind drei Starrachsen (11, 12, 13) hintereinander angeordnet. Pro Fahrzeugseite wirkt bei den Achsen (11) und (12) jeweils die Koppelstange (21) und (23) auf eine untere Wippe (31). Die dritte Achse (13) ist über eine Koppelstange (25) an einer zweiten unteren Wippe (33) angelenkt, die wiederum über eine Koppelstange (23a) mit der Achse (12) gekoppelt ist. Auf beide untere Wippen (31, 33) wirkt eine obere Wippe (38), die sich am U-Stabilisator (48) abstützt. Alle Koppelstangen (21-27) haben Gelenkstellen mit drei Freiheitsgraden. Die mittleren Gelenkstellen der Wippen haben reine Schwenkgelenke mit nur einem Freiheitsgrad.

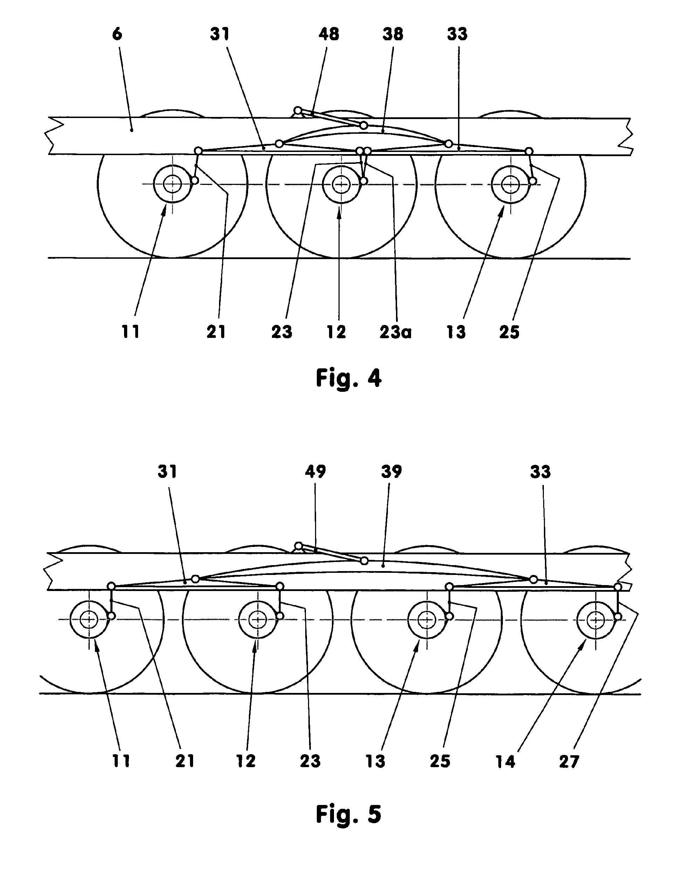

In Figur 4 ist eine Vierlingsachse dargestellt. Sie kann aus zwei hintereinander angeordneten Tandemachsen bestehen. Die unteren Wippen (31) und (33) stützen sich gemeinsam an einer oberen Wippe (39) ab. Die vergleichbaren Gelenkstellen der Koppelstangen (21-27) und der Wippen sind prinzipiell ähnlich aufgebaut wie bei der Drillingsachse nach Figur 4.

Bei den Figuren 4 und 5 wird bezüglich der Wippen aus Gründen der Vereinfachung nur eine Fahrzeugseite betrachtet.

Bei Fahrzeugen mit einem Leiterrahmen sind die Koppelstangen, die Wippen und die Arme des U-Stabilisators bauraumsparend zwischen der Außenseiten des Leiterrahmens und den Radreifen angeordnet.

### Bezugszeichenliste

- 1, 2: Rad
- 3: Reifendurchmesser
- 5: Fahrzeugaufbau
- 6: Rahmenträger
- 8: Längsschwenkachse
- 9: Fahrzeuglängsachse

- 11: 1. Achse
- 12: 2. Achse
- 13: 3. Achse
- 14: 4. Achse
- 15: Achskörper zu (11)
- 16: Mittellinie zu (15)
- 17: Achskörper zu (12)
- 18: Mittellinie zu (17)
- 19: Ebene durch (16, 18)

- 21, 22: Koppelstangen zu (11)
- 23, 24: Koppelstangen zu (12)
- 23a: Koppelstange zu (12)
- 25, 26: Koppelstange zu (13), (26) ist nicht dargestellt
- 27, 28: Koppelstange zu (14), (28) ist nicht dargestellt
- 29: Achsabstand

- 31: Wippe, untere, fahrerseitig
- 32: Wippe, untere, beifahrerseitig
- 33: Wippe, untere, fahrerseitig
- 38: Wippe, oben, klein, fahrerseitig
- 39: Wippe, oben, groß, fahrerseitig
- 40: U-Stabilisator
- 41: Torsionselement
- 42: Bohrung in (43)
- 43, 44: Stäbe, fahrerseitig, Stabpaar
- 45, 46: Stäbe, beifahrerseitig, Stabpaar
- 47: Bohrung in (43)
- 48: U-Stabilisator für Drillingsachse
- 49: U-Stabilisator für Vierlingsachse
- 50: Schwenkachse des (40)

- 51, 52: Gelenkstellen zu (11)
- 53, 54: Gelenkstellen zu (12)

- 61,62,63: Gelenkstellen zu (31)
- 65,66,67: Gelenkstellen zu (32)

- 81, 82: Lagerstelle für (40)
- 83, 84: Kragarme an (15), fahrerseitig
- 85, 86: Kragarme an (15), beifahrerseitig

- 93, 94: Kragarme an (17), fahrerseitig
- 95, 96: Kragarme an (17), beifahrerseitig

## Patentansprüche

1. Mechanisches Stabilisierungssystem für Tandemachsen im Kraftfahrzeugbau mit zwei hintereinander angeordneten, am Fahrzeugaufbau (5) beweglich gelagerten radtragenden Achsen (11, 12) oder Achsteilen,
- wobei jede Achse (11, 12) pro Radseite eine gelenkig gelagerte Koppelstange (21-24) aufweist,
- wobei pro Fahrzeugseite die Koppelstangen (21-24) der vorderen, ersten (11) und der hinteren, zweiten Achse (12) jeweils an ihren oberen Enden gelenkig mit den äußeren Gelenkstellen (61, 62; 65, 66) einer Wippe (31, 32) gekoppelt sind,
- wobei jede Wippe (31, 32) in ihrem mittleren Bereich eine Gelenkstelle (63, 67) aufweist, über die sie an jeweils einem freien Ende eines U-Stabilisators (40) angelenkt ist und
- wobei der U-Stabilisator (40) am Fahrzeugaufbau (5) mit mindestens zwei Lagerstellen (81, 82) gelagert ist.

2. Stabilisierungssystem gemäß Anspruch 1,
**dadurch gekennzeichnet, dass**
die Koppelstangen (21-24) annähernd vertikal angeordnet sind oder von der Vertikalen - in Fahrzeugquer- und/oder -längsrichtung nicht mehr als 15 Winkelgrade abweichen.

3. Stabilisierungssystem gemäß Anspruch 1,
**dadurch gekennzeichnet, dass**
die Ebene, die von den drei Gelenkstellen (61-63, 65-67) einer Wippe (31, 32) aufgespannt wird, primär parallel zur vertikalen Fahrzeuglängsmittelebene ausgerichtet ist.

4. Stabilisierungssystem gemäß Anspruch 1,
**dadurch gekennzeichnet, dass**
der U-Stabilisator (40) ein Torsionselement (41) hat, das - in Fahrtrichtung gesehen - vor den mittleren Gelenkstellen (63, 67) der Wippen (31, 32) angeordnet ist.

5. Stabilisierungssystem gemäß Anspruch 1,
**dadurch gekennzeichnet, dass**
der U-Stabilisator (40) Kragarme aufweist, die jeweils aus zwei parallel zueinander angeordneten Stäben (43-46) bestehen.

6. Stabilisierungssystem gemäß Anspruch 5,
**dadurch gekennzeichnet, dass**
die Höhe der Stäbe (43-46) mindestens fünfmal größer ist als deren Breite.

7. Stabilisierungssystem gemäß Anspruch 5,
**dadurch gekennzeichnet, dass** die Stäbe (43-46) des U-Stabilisators (40) länger sind als die halbe Länge der am U-Stabilisator (40) angelenkten Wippen (31, 32).

8. Stabilisierungssystem gemäß Anspruch 1,
**dadurch gekennzeichnet, dass**
die Gelenkstellen (61-63; 65-67) einer Wippe (31, 32) ein gleichschenkliges Dreieck bilden, dessen Höhe mindestens einem Sechstel der Länge der Dreieckshypotenuse entspricht.

9. Mechanisches Stabilisierungssystem für eine Drillingsachse im Kraftfahrzeugbau mit drei hintereinander angeordneten, am Fahrzeugaufbau (5) beweglich gelagerten radtragenden Achsen (11-13) oder Achsteilen,
- wobei jede Achse (11-13) pro Radseite mindestens eine gelenkig gelagerte Koppelstange (21-26) aufweist,
- wobei pro Fahrzeugseite die Koppelstangen (21-26) von je zwei hintereinander angeordneten Achsen (11, 12; 12, 13) jeweils an ihren oberen Enden gelenkig mit den äußeren Gelenkstellen einer unteren Wippe (31, 33) gekoppelt sind,
- wobei jede untere Wippe (31, 33) in ihrem mittleren Bereich eine Gelenkstelle aufweist, über die sie paarweise an den äußeren Enden einer oberen Wippe (38) gekoppelt ist,
- wobei jede obere Wippe (38) in ihrem mittleren Bereich eine Gelenkstelle aufweist, über die sie an jeweils einem freien Ende eines U-Stabilisators (48) angelenkt ist und
- wobei der U-Stabilisator (48) am Fahrzeugaufbau (5, 6) in mindestens zwei Gelenkstellen gelagert ist.

10. Mechanisches Stabilisierungssystem für eine Vierlingsachse im Kraftfahrzeugbau mit vier hintereinander angeordneten, am Fahrzeugaufbau (5) beweglich gelagerten radtragenden Achsen (11-14) oder Achsteilen,
- wobei jede Achse (11-14) pro Radseite eine gelenkig gelagerte Koppelstange (21-28) aufweist,
- wobei pro Fahrzeugseite die Koppelstangen (21-28) von je zwei hintereinander angeordneten Achsen (11-14), der ersten (11) und der zweiten (12) sowie der dritten (13) und der vierten (14), jeweils an ihren oberen Enden gelenkig mit den äußeren Enden einer unteren Wippe (31, 33) gekoppelt sind,
- wobei jede untere Wippe (31, 33) in ihrem mittleren Bereich eine Gelenkstelle aufweist, über die sie paarweise an den äußeren Enden einer oberen Wippe (39) gekoppelt ist,
- wobei jede obere Wippe (39) in ihrem mittleren Bereich eine Gelenkstelle aufweist, über die sie an jeweils einem freien Ende eines U-Stabilisators (49) angelenkt ist und
- wobei der U-Stabilisator (49) am Fahrzeugaufbau (5, 6) in mindestens zwei Gelenkstellen gelagert ist.
